(19) **Europäisches Patentamt**

**European Patent Office**

**Office européen des brevets**

(11) **EP 0 835 176 B1**

(12) **EUROPÄISCHE PATENTSCHRIFT**

(45) Veröffentlichungstag und Bekanntmachung des Hinweises auf die Patenterteilung:
**03.05.2000 Patentblatt 2000/18**

(51) Int Cl.⁷: **B29C 45/27**, B29C 45/30

(21) Anmeldenummer: **96918573.5**

(86) Internationale Anmeldenummer:
**PCT/CH96/00242**

(22) Anmeldetag: **01.07.1996**

(87) Internationale Veröffentlichungsnummer:
**WO 97/02129 (23.01.1997 Gazette 1997/05)**

(54) **DÜSE ZUR SPRITZGUSSVERARBEITUNG VON KUNSTSTOFFEN**

PLASTIC INJECTION MOULDING NOZZLE

BUSE DE MOULAGE PAR INJECTION DE MATIERES PLASTIQUES

(84) Benannte Vertragsstaaten:
**AT CH DE FR IT LI**

(30) Priorität: **30.06.1995 CH 192895**

(43) Veröffentlichungstag der Anmeldung:
**15.04.1998 Patentblatt 1998/16**

(73) Patentinhaber: **Stern, Christian**
**3234 Vinelz (CH)**

(72) Erfinder: **Stern, Christian**
**3234 Vinelz (CH)**

(74) Vertreter: **Frei, Alexandra Sarah**
**Frei Patentanwaltsbüro**
**Postfach 768**
**8029 Zürich (CH)**

(56) Entgegenhaltungen:
| | |
|---|---|
| **WO-A-95/05930** | **DE-A- 3 529 881** |
| **DE-U- 8 618 162** | **US-A- 4 268 241** |
| **US-A- 4 652 230** | **US-A- 4 787 836** |

**Beschreibung**

Die Erfindung betrifft eine Düse zur Spritzgussverarbeitung von Kunststoffen.

In einer Spritzgussmaschine wird üblicherweise zunächst Kunststoffgranulat erhitzt und zu einer Kunststoffschmelze verflüssigt. Die Kunststoffschmelze gelangt durch eine Düse über einen Anschnitt am Düsenkopf zu einem Kunststofformteil. Die Düse verfügt über eine Wärmequelle; die Wärmequelle kann entweder als direkte Heizung am Düsenkörper oder indirekt, mittels Wärmeleitung von anderen Teilen der Vorrichtung, Wärme an die Düse abgeben. Unbeheizte Düsen nehmen Wärme von einem Verteiler bzw. Heisskanalblock oder von einem beheizten Zylinder der Spritzgussmaschine auf.

Ein Probiem bei solchen Düsen ist immer der Temperaturabfall im unbeheizten Düsenteil. Im Bereich der Wärmequelle ist die Temperatur der Kunststoffschmelze hoch, im wesentlichen gleich derjenigen der Wärmequelle. Wegen Wärmeverlusten infolge von Wärmeleitung, Konvektion und Strahlung nimmt jedoch die Temperatur der Kunststoffschmelze mit wachsendem Abstand vom beheizten Bereich ab. Am Anschnitt des Düsenkopfes kann sie' wesentlich niedriger sein als im beheizten Bereich.

Der Temperaturabfall in der Düse kann zu fatalen Störungen des ganzen Verarbeitungsablaufs führen. Sobald die Temperatur der Kunststoffschmelze unter dem Kristallitschmelzpunkt des Kunststoffes liegt, friert das Schmelzgut ein, und die Düse wird funktionsunfähig. Will dies der Anlagenbediener durch eine Erhöhung der Heizleistung verhindern oder rückgängig machen, so kann es geschehen, dass das Schmelzgut durch Überhitzung im beheizten Bereich beschädigt wird.

Abgesehen von solchen Störungen haben konventionelle Spritzgussdüsen noch weitere Nachteile. Die oben beschriebenen Probleme machen die Bedienung und Überwachung der Anlage personalintensiv. Jeder Kunststoff ist nur in einem bestimmten Temperaturfenster verarbeitbar. Deshalb muss idealerweise für einen bestimmten Kunststoff die Düse so dimensioniert werden, dass an ihrem Eingang die maximale Verarbeitungstemperatur nicht über- und an ihrem Ausgang die minimale Verarbeitungstemperatur nicht unterschritten wird. Eine Verarbeitung von verschiedenen Kunststoffen mit derselben Düse kann also problematisch sein. Auch wenn eine bestimmte Düse den für einen bestimmten Kunststoff erforderlichen Temperaturbereich einhält, so kann sich ein grosser Temperaturabfall während der Verarbeitung trotzdem nachteilig sowohl auf das Fliessverhalten der Kunststoffschmelze in der Düse als auch auf die Eigenschaften des Produktes auswirken. Ein erneutes Hochfahren der Anlage nach einem Einfrieren des Kunststoffes in der Düse kann problematisch sein, weil während des Aufheizvorgangs der Kunststoff im beheizten Bereich bereits geschmolzen, im Anschnittbereich jedoch noch fest sein kann.

Diese Nachteile könnten teilweise verhindert werden, indem die Düse direkt beheizt wird. Damit müssen aber andere Nachteile in Kauf genommen werden. Die Heizung - meist in Form von Heizbändern -, der zur Regelung benötigte Thermofühler sowie die benötigten elektrischen Leitungen und Kontakte sind störungsanfällig. Sie benötigen ausserdem viel Platz im Eintauchbereich.

Zur Verminderung der oben geschilderten Probleme ist ein Heisskanalsystem mit indirekt beheiztem Wärmeleittorpedo bekannt, bspw. aus der Informationsschrift "Technische Kunststoffe: Berechnen - Gestalten - Anwenden. C.2.1 Heisskanalsystem indirekt beheizter Wärmeleittorpedo" der Hoechst AG, Ausgabe 1982, 4. Auflage. Bei einem solchen Heisskanalsystem befindet sich im unbeheizten Düsenteil ein "Wärmeleittorpedo", im folgenden "Torpedo" genannt. Diser Torpedo ist im wesentlichen ein von der Kunststoffschmelze umflossener Stab im unbeheizten Düsenteil. Er hat guten thermischen Kontakt mit dem beheizten Düsenkörper und eine hohe Wärmeleitfähigkeit. Dank diesen Eigenschaften überträgt der Torpedo Wärme vom beheizten Düsenteil in den Anschnittbereich und sorgt dafür, dass die Formmasse bis in den Anschnittbereich schmelzflüssig bleibt.

Mit dem Torpedo kann zwar der Temperaturabfall im unbeheizten Düsenteil etwas vermindert werden, doch reicht diese Verminderung im allgemeinen nicht aus, um die meisten oben geschilderten Nachteile zu beheben. Auch der Torpedo kann nicht verhindern, dass viel Wärme von der Kunststoffschmelze nach aussen, ins Spritzgusswerkzeug, abfliesst. Er führt zwar Wärme durch die Mitte des Kanals, in welchem die Kunststoffschmelze, fliesst, nach, doch geht ein grosser Teil dieser Wärme ungehindert nach aussen verloren. Ferner zeigen Berechnungen, dass zur Verminderung des Temperaturabfalls dickwandige Torpedos und breite Durchflusskanäle erforderlich sind; dies führt dazu, dass der unbeheizte Düsenteil einen relativ grossen Durchmesser aufweist und viel Platz einnimmt.

Eine andere technische Massnahme zur Verminderung des unerwünschten Temperaturabfalls wird in der Patentschrift US-4,268,241 beschrieben. Gemäss dieser Schrift wird der vordere, unbeheizte Teil der Düse mit einem wärmeleitenden röhrenförmigen Einsatz versehen. Mit dieser Lösung wird das Problem des Temperaturabfalls ebenfalls vermindert, aber nicht befriedigend gelöst Der unbeheizte Düsenteil ist in der Düse gemäss US-4,268,241 relativ lang, so dass die Temperatur im unbeheizten Düsenteil zum Anschnitt hin relativ stark abnimmt. Dieser Nachteil ist dadurch bedingt, dass die Heizung mittels einer Schraubenmutter an der Düse befestigt ist. Auch bei dieser Lösung müssen relativ dickwandige Einsätze verwendet werden, was wiederum zu einem unerwünscht grossen Düsendurchmesser führt.

Der Erfindung liegt die Aufgabe zugrunde, den Temperaturabfall in der Spritzgussdüse unter einen kritischen Wert zu verringern und die oben beschriebenen Nachteile bekannter Vorrichtungen zur Spritzgussverarbeitung von Kunststoffen zu beseitigen.

Die Erfindung löst die Aufgabe durch Einfügen eines oder mehrerer temperaturausgleichender Elemente in spezieller Anordnung in die Düse, wie in den Patentansprüchen definiert.

Die erfindungsgemässe Düse sorgt für eine bessere Wärmeverteilung und damit für ein stabileres Temperaturverhalten in der kritischen Zone einer Spritzgussdüse. Sie benützt ein oder mehrere zusätzliche temperaturausgleichende Elemente, deren Wirkung grundsätzlich auf den drei physikalischen Phänomenen Wärmeleitung, Wärmeisolation und/oder Wärmereflexion beruht. Diese Phänomene können, je nach Ausführungsform, einzeln oder miteinander kombiniert zur Anwendung gebracht werden. Durch Wärmeleitung werden Wärmeverluste ausgeglichen, durch Wärmeisolation bzw. Wärmereflexion werden Wärmeverluste vermindert.

Die temperaturausgleichenden Elemente in der erfindungsgemässen Düse zur Spritzgussverarbeitung von Kunststoffen sind zusätzliche Elemente in der Düse, welche die Temperaturdifferenz zwischen dem beheizten Bereich und dem Anschnitt des Düsenkopfes mittels Wärmeleitung, Wärmeisolation und/oder Wärmereflexion verringern. Sie wirken einer Abkühlung der Kunststoffschmelze entgegen und verringern somit den Temperaturabfall in der Kunststoffschmelze zwischen dem beheizten Bereich und dem Anschnitt. Mit anderen Worten: Sie gleichen die Temperatur der Kunststoffschmelze entlang ihres Weges durch die Düse und/oder den Düsenkopf aus.

In einer bevorzugten Ausführungsform umgeben die temperaturausgleichenden Elemente im wesentlichen den Durchflusskanal bzw. den Ringspalt, in welchem die Kunststoffschmelze durch die Düse und/oder den Düsenkopf fliesst. Ein temperaturausgleichendes Element kann beispielsweise als gerader Hohlzylinder oder Rohr ausgebildet sein. Mehrere temperaturausgleichende Elemente können beispielsweise als Zylinderschalen mit verschiedenen Radien, die koaxial in der Düse und/oder im Düsenkopf angeordnet sind, ausgebildet sein. Eine solche Anordnung kann die temperaturausgleichende Wirkung in der Düse verstärken.

Die temperaturausgleichende Wirkung der temperaturausgleichenden Elemente beruht, wie oben erwähnt, auf Wärmeleitung, Wärmeisolation und/oder Wärmereflexion. Ein temperaturausgleichendes Element kann demgemäss wärmeleitende, wärmeisolierende und/oder wärme reflektierende Eigenschaften aufweisen. Ein wärmeleitendes temperaturausgleichendes Element besteht zumindest teilweise aus einem oder mehreren wärmeleitenden Materialien wie Kupfer, einer Kupferlegierung oder Stahl. Es steht in thermischem Kontakt mit dem beheizten Bereich, nimmt von diesem Wärme auf, leitet sie in Richtung Anschnitt und gibt sie an die Kunststoffschmelze ab, wodurch es Wärmeverluste ausgleicht. Ein wärmeisolierendes temperaturausgleichendes Element schirmt das Düseninnere, einen eventuell vorhandenen Torpedo und eventuelle andere temperaturausgleichende Elemente thermisch gegen aussen ab und vermindert somit durch Wärmeleitung verursachte Wärmeverluste der Kunststoffschmelze. Es kann aus einem wärmeisolierenden Material wie Kunststoff oder Keramik oder auch aus einer Luftschicht bestehen. Ein wärmereflektierendes temperaturausgleichendes Element reflektiert Wärme ins Düseninnere zurück und vermindert somit durch Wärmestrahlung verursachte Wärmeverluste der Kunststoffschmelze. Es kann beispielsweise aus einer Aluminium- und/oder Chrom-Nickel-Schicht bestehen. In bestimmten Ausführungsformen ist es unter Umständen nicht möglich, exakt zwischen wärmeleitenden, wärmeisolierenden und/oder wärmereflektierenden temperaturausgleichenden Elementen zu unterscheiden, weil ein temperaturausgleichendes Element mehrere dieser thermischen Eigenschaften in sich vereinigen kann.

Ein oder mehrere temperaturausgleichende Elemente erhöhen die Betriebssicherheit von Spritzgussverarbeitungsanlagen wesentlich. Einerseits verhindern sie unter normalen Betriebsbedingungen das Einfrieren des Schmelzgutes im Anschnitt, andererseits bannen sie die Gefahr des Verbrennens oder Überhitzens des Schmelzgutes durch Vermeidung der Nachregulierung von Hand. Ausserdem ist dank dem oder den temperaturausgleichenden Elementen die Verarbeitungstemperatur des Schmelzgutes innerhalb eines relativ kleinen Temperaturbereiches definierbar, sodass ein und dieselbe Düse für die Verarbeitung verschiedener Kunststoffe benützt werden kann. Das Fliessverhalten der Kunststoffschmelze im unbeheizten Düsenteil und die Eigenschaften des Produktes sind besser kontrollierbar. Die erfindungsgemässe Vorrichtung ermöglicht überhaupt erst die Verarbeitung von flammgeschützten oder thermisch empfindlichen Kunststoffen oder von Kunststoffen, die ein enges Verarbeitungstemperaturfenster aufweisen. Sie beseitigt auch die oben geschilderten Probleme beim Hochfahren einer Anlage mit in den Heisskanälen eingefrorenem Kunststoff; dadurch werden Betriebsunterbrüche problemlos möglich. Düsen mit temperaturausgleichenden Elementen können zudem mit kleineren Durchmessern dimensioniert und damit platzsparender eingesetzt werden. Ausserdem können sie bei Bedarf länger als bisher gestaltet werden.

Im folgenden wird die erfindungsgemässe Düse mit einem oder mehreren temperaturausgleichenden Elementen anhand von Figuren detailliert beschrieben. Dabei zeigen:

Fig. 1-5      schematische Längsschnitte durch verschiedene Ausführungsformen einer erfindungsgemässe Düse,

Fig. 6 und 7 schematische Querschnitte durch verschiedene Ausführungsformen einer erfindungsgemässen Düse,

Fig. 8 qualitative axiale Temperaturverläufe in einer erfindungsgemässen Düse und in einer Düse gemäss dem Stand der Technik sowie entsprechende schematische Längsschnittzeichnungen und

Fig. 9 qualitative radiale Temperaturverläufe in einer erfindungsgemässen Düse und in einer Düse gemäss dem Stand der Technik sowie entsprechende schematische Querschnittzeichnungen.

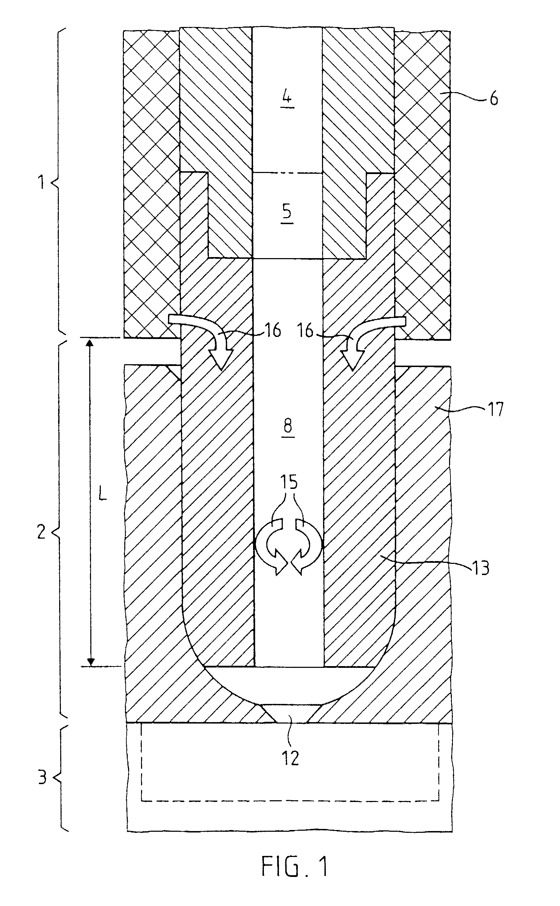

**Figur 1** zeigt schematisch einen Teil einer erfindungsgemässen Düse zur Spritzgussverarbeitung von Kunststoffen im Längsschnitt; ein Torpedo, welches ebenfalls zur erfindungsgemässen Düse gehört, ist hier nicht eingezeichnet, um zunächst die Wirkung eines temperaturausgleichenden Elementes erklären zu können.

In der Darstellung lassen sich ein beheizter Düsenteil 1 und ein unbeheizter Düsenteil oder Düsenkopf 2 erkennen, ebenso ein Kunststoffformteil 3. Kunststoffschmelze gelangt durch einen Schmelzkanal 4 in einen Düsenkopfvorraum 5. Eine Wärmequelle 6 hält die Temperatur $T_H$ der Schmelze im Düsenkopfvorraum 5 auf einer zeitlich und örtlich konstanten, dem zu verarbeitenden Kunststoff angepassten Temperatur $T_H$ von typischerweise ca. 300 °C. Die Wärmequelle 6 kann als Heizung in Form von Heizbändern ausgebildet sein. Eine direkte Heizung kann bei unbeheizten Düsen auch entfallen; bei einer unbeheizten Düse ist die Wärmequelle 6 ein Verteiler bzw. Heisskanalblock oder ein beheizter Zylinder der Spritzgussmaschine. Vom Düsenkopfvorraum 5 gelangt die Kunststoffschmelze in einen Durchflusskanal 8 und weiter zu einem Anschnitt 12. Durch den Anschnitt 12 wird die Kunststoffschmelze in das Kunststoffformteil 3 gespritzt. Der unbeheizte Düsenteil 2 ist in einem Werkzeug 17 eingetaucht.

Die bis hierhin beschriebenen Bestandteile sind auch in herkömmlichen Vorrichtungen zur Spritzgussverarbeitung von Kunststoffen zu finden. Das Wesentliche an der vorliegenden Erfindung ist ein temperaturausgleichendes Element 13, ein zusätzliches Element in spezieller Anordnung in der Düse mit der Aufgabe, den Temperaturabfall der Kunststoffschmelze in der Düse zu minimieren bzw. zu verringern. Das temperaturausgleichende Element 13 umgibt vorzugsweise den Durchflusskanal 8; im Beispiel von Fig. 1 bildet es sogar die äussere Begrenzung des Durchflusskanals 8. Andere geometrische Anordnungen sind, wie weiter unten gezeigt wird, auch möglich. In Fig. 1 ist nur ein temperaturausgleichendes Element 13 dargestellt; eine erfindungsgemässe Düse kann aber auch mehrere temperaturausgleichende Elemente in spezieller Anordnung beinhalten.

Das temperaturausgleichende Element 13 wirkt wärmeleitend, wärmeisolierend und/oder wärmereflektierend und ist vorzugsweise aus Materialien aufgebaut, welche mindestens eine dieser Eigenschaften in ausgeprägtem Masse aufweisen. Ein wärmeleitendes temperaturausgleichendes Element 13 steht in thermischem Kontakt mit dem beheizten Bereich der Vorrichtung, in Fig. 1 beispielsweise mit dem beheizten Düsenteil 1 bzw. mit der Heizung 6. So kann es Wärme, angedeutet durch Pfeile 16, vom beheizten Düsenteil 1 aufnehmen und bis zum Anschnitt 12, entlang einer Länge L, leiten. Damit gleicht es Wärmeverluste durch Wärmeleitung aus. Es kann beispielsweise aus Kupfer, einer Kupferlegierung oder Stahl bestehen. Ein wärmeisolierendes temperaturausgleichendes Element 13 schirmt das Düsenkopfinnere 8 und/-oder eventuelle weitere temperaturausgleichende Elemente gegen aussen, beispielsweise gegen das Werkzeug 17, ab. Es kann beispielsweise aus einem wärmeisolierenden Material wie Kunststoff, Keramik oder Sinterkeramik bestehen oder auch als Luftschicht oder Vakuumschicht ausgebildet sein. Ein wärmereflektierendes temperaturausgleichendes Element reflektiert Wärme, angedeutet durch Pfeile 15, ins Düsenkopfinnere 8 zurück und vermindert somit durch Wärmestrahlung verursachte Wärmeverluste der Kunststoffschmelze. Es kann beispielsweise aus einer Aluminium- und/oder Chrom-Nickel-Schicht bestehen.

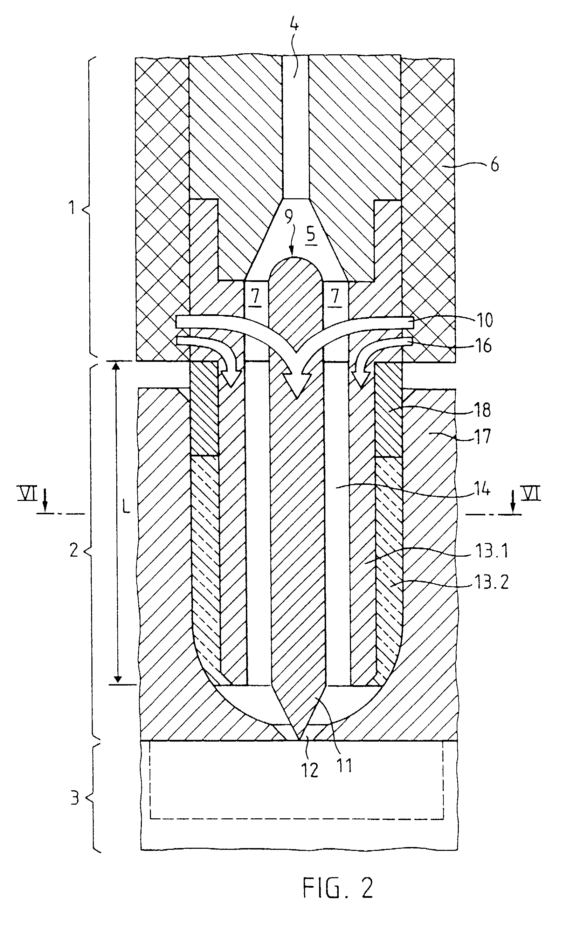

Figur 2 zeigt eine bevorzugte Ausführungsform einer erfindungsgemässen Düse. Die Hauptbestandteile beheizter Düsenteil 1 und unbeheizter Düsenteil oder Düsenkopf 2 wurden schon anlässlich der Fig. 1 erläutert, ebenso das Kusntstofformteil 3, den Schmelzkanal 4, der Düsenkopfvorraum 5, die Heizung 6 und das Werkzeug 17. Zusätzlich ist die in Fig. 2 dargestelle Düse mit einem Torpedo 9 ausgestattet. Der Torpedo 9 wird indirekt durch den beheizten Düsenteil 1 beheizt; Pfeile 10 deuten den entsprechenden Wärmefluss an. Die Kunststoffschmelze gelangt über mehrere Durchlässe 7 zu einem den Torpedo 9 umgebenden Ringspalt 14 und schliesslich an einer Torpedospitze 11 vorbei durch den Anschnitt 12 zum Kunststoffformteil 3.

In der Ausführungsform von Fig. 2 sind zwei temperaturausgleichende Elemente vorhanden: ein wärmeleitendes temperaturausgleichendes Element 13.1 und ein wärmeisolierendes temperaturausgleichendes Element 13.2. Das wärmeleitende temperaturausgleichende Element 13.1 steht in thermischem Kontakt mit dem beheizten Düsenteil 1, sodass es Wärme, angedeutet durch Pfeile 16, vom beheizten Düsenteil 1 aufnehmen und bis zum Anschnitt 12, entlang einer Länge L, leiten kann. Das wärmeisolierende temperaturausgleichende Element 13.2, das beispielsweise eine Luftschicht sein kann, schirmt das Düsenkopfinnere, d.h. den Torpedo 9 und den Ringspalt 8, sowie das wärmeleitende temperaturausgleichende Element 13.1 gegen das Werkzeug 17 ab.

Das wärmeleitende temperaturausgleichende Element 13.1 kann mit mindestens einem wärmeisolierenden Stützelement 18 gegen das Werkzeug 17 abgestützt bzw. geführt oder abgedichtet sein. Das wärmeleitende temperaturausgleichende Element 13.1 kann in thermischem Kontakt mit dem Torpedo 9 stehen oder sogar aus dem gleichen Stück gefertigt sein wie der Torpedo 9.

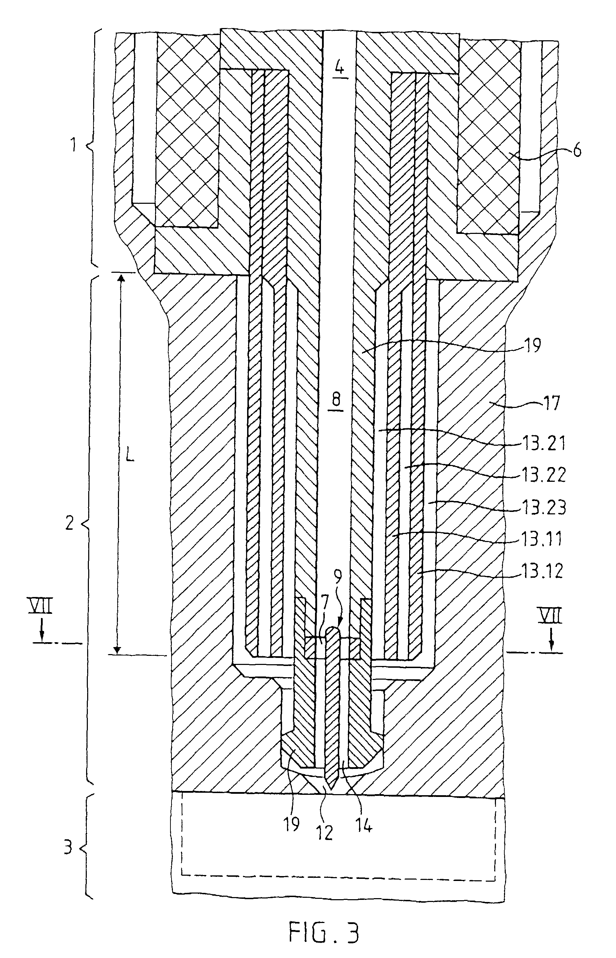

Eine andere Ausführungsform der erfindungsgemässen Düse zeigt **Figur 3.** Hier sind fünf temperaturausgleichende Elemente vorhanden: zwei wärmeleitende temperaturausgleichende Elemente 13.11 und 13.12 sowie drei wärmeisolierende temperaturausgleichende Elemente 13.21, 13-22 und 13.23. Die tepmeraturausgeleichenden Elemente 13.11, 13.12, 13.21-23 sind im wesentlichen als koaxiale gerade Hohlzylinder oder Rohre um den Durchflusskanal 8 und um ein Düseninnenrohr 19 angeordnet, wobei radial nach aussen jeweils ein wärmeisolierendes auf ein wärmeleitendes temperaturausgeleichendes Element folgt und umgekehrt.

Eine solche Anordnung von koaxialen temperaturausgleichenden Elementen 13.11, 13.12, 13.21-23 hat sehr gute temperaturausgleichende Eigenschaften. Die Temperatur fällt kaskadenartig nach aussen leicht ab. Im Durchflusskanal 8 ist jedoch entlang einer Länge L von bis zu mehreren Zentimetern kaum ein Temperaturabfall zu beobachten. So kann also die Länge des unbeheizten Düsenteils 2 besonders gross gewählt werden, ohne dass ein nennenswerter Temperaturabfall in der Düse auftritt.

Bei der Ausführungsform von Fig. 3 steht kein temperaturausgleichendes Element in Kontakt mit der Kunststoffschmelze. Dies hat den Vorteil, dass die temperaturausgleichenden Elemente 13.11, 13.12, 13.21-23 mechanisch nicht stabil und abrasurfest sein müssen, dafür in Bezug auf ihre thermischen Eigenschaften optimiert werden können. Das mit der Kunststoffschmelze in Kontakt stehende Düseninnenrohr 19 kann beispielsweise aus Warmarbeitsstahl bestehen, die wärmeleitenden temperaturausgleichenden Elemente 13.11 und 13.12 aus einer Kupferlegierung. Die wärmeisolierenden temperaturausgleichenden Elemente 13.21-23 können beispielsweise Luftschichten bzw. Luftspalte sein. Der Torpedo 9 kann beispielsweise aus Molybdän bestehen.

Ein weiterer Vorteil des Ausführungsbeispiels von Fig. 3 ist, dass damit unterschiedliche Temperaturausdehnungen von Düse und Werkzeug 17 ausgeglichen werden können. Die Luftschichten 13.21-23 erlauben nämlich bis zu einem gewissen Masse Verbiegungen der Metallrohre 13.11, 13.12 und ermöglichen damit kleine Verschiebungen der Düse bezüglich des Werkzeuges 17 in radialer Richtung. Die Lösung des Temperaturausdehnungsproblems ist besonders wichtig bei Multikopf-Düsen.

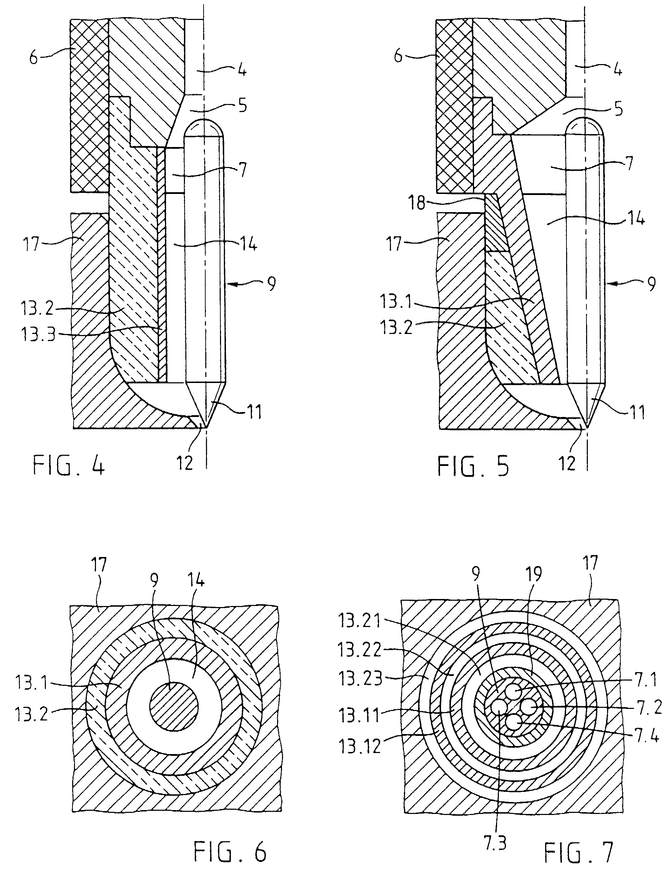

Eine weitere Ausführungsform der erfindungsgemässen Düse ist in **Fig. 4** dargestellt, aus Symmetriegründen im wesentlichen nur eine Hälfte. Die geometrische Anordnung ist ähnlich wie in Fig. 2. Der wesentliche Unterschied besteht darin, dass die Düse von Fig. 4 eine Kombination eines wärmereflektierenden temperaturausgleichendne Elementes 13.3 und eines wärmeisolierenden temperaturausgleichenden Elementes 13.2 beinhaltet. Weitere, hier nicht dargestellte Kombinationen von wärmeleitenden, wärmeisolierenden bzw. wärmereflektierenden temperaturausgleichenden Elementen 13.1, 13.2 bzw. 13.3 sind möglich und gehören auch zur Erfindung.

Die **Figuren 5-7** befassen sich mit der geometrischen Form der temperaturausgleichenden Elemente; ihre innere Struktur, Beschaffenheit und physikalische Funktionsweise spielt dabei eine untergeordnete Rolle. In den Figuren 1-4 haben die temperaturausgleichenden Elemente 13 bzw. 13.1, 13.2 bzw. 13.11, 13.12, 13.21-23 die Form von geraden Hohlzylindern oder Rohren. Dies muss nicht notwendigerweise so sein; aus thermo- oder hydrodynamischen Erwägungen könnten sich andere Formen als vorteilhafter erweisen. Ein Beispiel dazu gibt die **Figur 5.** Hier hat das wärmeleitende temperaturausgleichende Element 13.1 die Form eines hohlen geraden Kegelstumpfes, der nach unten zusammenläuft. Im oberen Teil der Düses wird so ein "Reservoir" gebildet.

Die **Figuren 6 und 7** zeigen schematische Querschnitte durch erfindungsgemässe Düsen. **Figur 6** zeigt einen Querschnitt durch die in Fig. 2 mit VI-VI bezeichnete Ebene. Die temperaturausgleichenden Elemente 13.1 und 13.2 haben im Querschnitt die Form von konzentrischen Kreisringen mit verschiedenen Radien. **Figur 7** zeigt einen Querschnitt durch die in Fig. 3 mit VII-VII bezeichnete Ebene. Die temperaturausgleichenden Elemente 13.11, 13.12, 13.21-23 haben im Querschnitt die Form von konzentrischen Kreisringen mit verschiedenen Radien. Kombinationen der gezeigten Beispiele und weitere, auch nicht kreissymmetrische geometrische Querschnittformen der temperaturausgleichenden Elemente sind natürlich möglich.

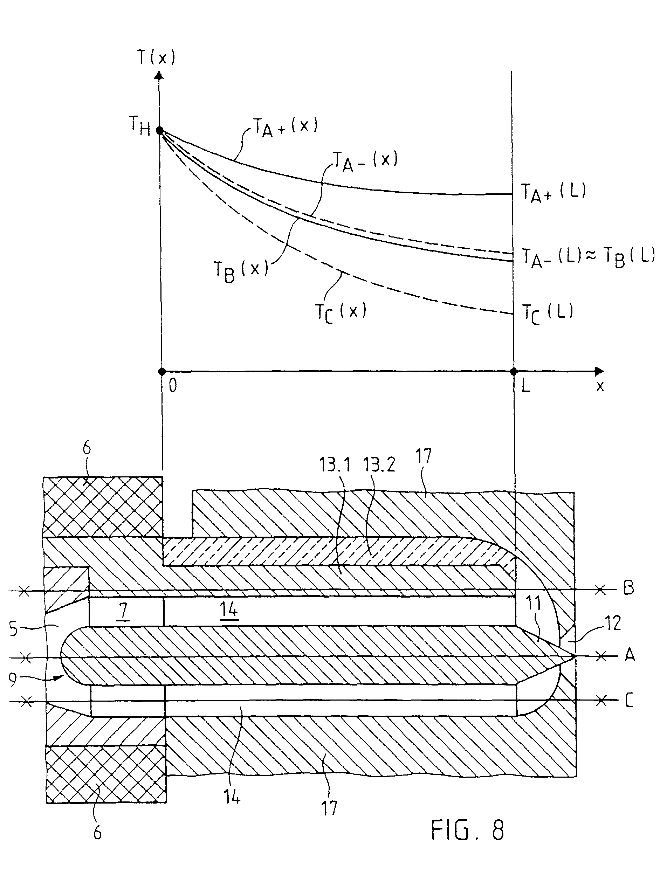

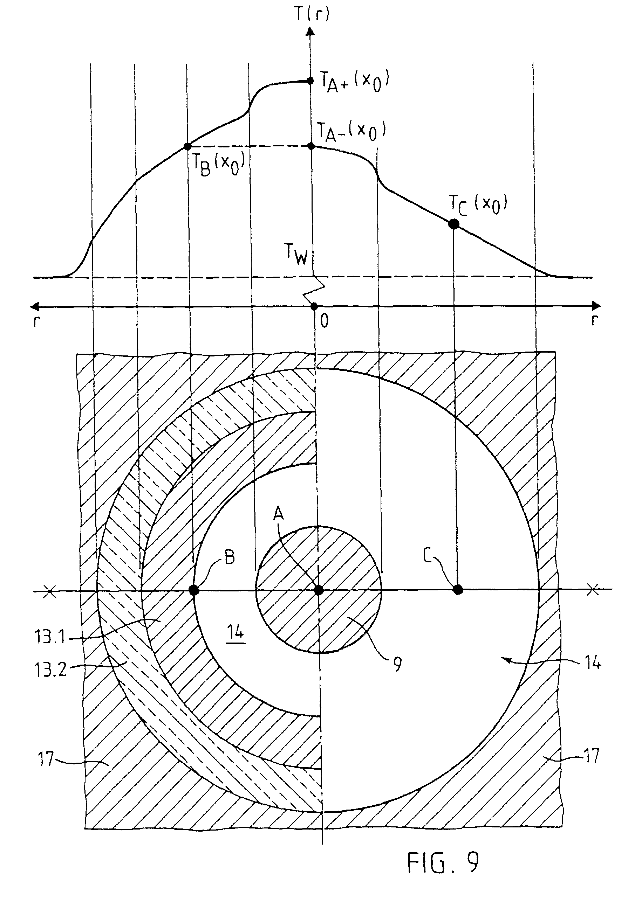

Die **Figuren 8 und 9** befassen sich mit Temperaturverläufen in der Düse. Als Beispiel wird eine erfindungsgemässe Düse mit einem wärmeleitenden temperaturausgleichenden Element 13.1, einem wärmeisolierenden temperaturausgleichenden Element 13.2 und einem Torpedo 9, wie in den Figuren 2 und 6, betrachtet. Wenn das oder die temperaturausgleichenden Elemente eine andere physikalische Wirkungsweise besitzen, wenn sie eine andere als die hier dargestellte geometrische Form haben oder wenn der Torpedo 9 fehlt, so können sich die Temperaturverläufe geringfügig verändern. Die vorteilhafte Wirkung der temperaturausgleichenden Elemente bleibt aber dieselbe: möglichst gute Erhaltung der Schmelzguttemperatur gegen den Anschnitt 12 hin.

In **Fig. 8** werden qualitative axiale Temperaturverläufe mit temperaturausgleichenden Elementen und ohne temperaturausgleichende Elemente betrachtet. Auch der dazugehörige Längsschnitt durch die Düse ist schematisch dargestellt, wobei die Situation mit temperaturausgleichenden Elementen in der oberen und die Situation ohne temperaturausgleichende Elemente in der unteren Längsschnitthälfte dargestellt ist. Es bezeichnen, jeweils als Funktion der Ortskoordinate x:

$T_{A+}(x)$     die Torpedotemperatur entlang dem Schnitt A mit temperaturausgleichenden Elementen 13.1, 13.2,

$T_{A-}(x)$     die Torpedotemperatur entlang der Linie A ohne temperaturausgleichende Elemente,

$T_B(x)$     die Temperatur an der Innenseite des innersten temperaturausgleichenden Elementes 13.1 entlang der Linie B und

$T_C(x)$     die Schmelzguttemperatur entlang der Linie C ohne temperaturausgleichende Elemente.

Im Düsenkopfvorraum 5 hält die Heizung 6 alle Elemente und die Kunststoffschmelze auf der Temperatur $T_H$ von typischerweise 300 °C. Ohne temperaturausgleichendes Element nimmt die Torpedotemperatur $T_{A-}(x)$ wegen Wärmeverlusten ins Werkzeug 17 mit einer typischen Temperatur von 100 °C mit wachsendem x ab bis zum Wert $T_{A-}(L)$ (< $T_H$) bei der Torpedospitze 11. Das Schmelzgut erleidet ohne temperaturausgleichende Elemente noch grössere Wärmeverluste, so dass seine Temperatur $T_C(L)$ beim Anschnitt 12 wesentlich niedriger ist als $T_{A-}(L)$.

Mit temperaturausgleichenden Elementen hingegen nimmt die Torpedotemperatur $T_{A+}(x)$ mit wachsendem x nur schwach ab bis zum Wert $T_{A+}(L)$ (> $T_{A-}(L)$) bei der Torpedospitze 11. Auch die Temperatur $T_B(x)$ an der Innenseite des innersten temperaturausgleichenden Elementes 13.1 nimmt mit wachsendem x ab, aber weniger stark als $T_C(x)$, denn das temperaturausgleichende Element 13.1 ist ein guter Wärmeleiter und steht in thermischem Kontakt mit dem beheizten Düsenteil 1. Berechnungen und Erfahrungen aus der Praxis bestätigen die intuitive Vermutung, dass für die vorliegende Anordnung die Temperatur $T_B(x)$ an der Innenseite des temperaturausgleichenden Elementes 13.1 ungefähr gleich $T_{A-}(x)$ ist. Zusammenfassend lassen sich also folgende Beziehungen zwischen den betrachteten Temperaturen aufstellen:

$$T_H > T_{A+}(L) > T_{A-}(L) \approx T_B(L) > T_C(L).$$

Die Schmelzguttemperatur $T_S(x)$ liegt in der Situation mit temperaturausgleichenden Elementen zwischen $T_{A+}(x)$ und $T_B(x)$:

$$T_{A+}(x) \geq T_S(x) \geq T_B(x).$$

In **Figur 9** werden qualitative radiale Temperaturverläufe an einem festen Ort $x_0$ betrachtet, wobei $0 < x_0 \leq L$ gilt; Abszisse ist der Radius r. Auch der dazugehörige Querschnitt durch die Düse ist schematisch gezeigt. Die Situation mit temperaturausgleichenden Elementen ist in der linken und die Situation ohne temperaturausgleichende Elemente in der rechten Bildhälfte dargestellt. Die Buchstaben A, B und C entsprechen den in Fig. 8 definierten Linien. Mit temperaturausgleichenden Elementen und ohne temperaturausgleichende Elemente nimmt die Temperatur nach aussen bis zur Werkzeugtemperatur $T_W$ ab. Wiederum wird hier die vorteilhafte Wirkung der temperaturausgleichenden Elemente ersichtlich: Sie bewirken, dass die Schmelzguttemperatur $T_S(x_0)$ und die Torpedotemperatur $T_{A+}(x_0)$ höher sind als ohne temperaturausgleichende Elemente. Wie schon anlässlich der Fig. 8 diskutiert, ist die Temperatur $T_B(x_0)$ an der Innenseite des innersten temperaturausgleichenden Elementes 13.1 ungefähr gleich der Torpedotemperatur $T_{A-}(x_0)$ ohne temperaturausgleichende Elemente. Die Schmelzguttemperatur $T_S(x_0)$ ist mit temperaturausgleichendem Element höher als $T_B(x_0)$, ohne temperaturausgleichendes Element niedriger als $T_{A-}(x_0)$. Es lassen sich also folgende Beziehungen zwischen den betrachteten Temperaturen aufstellen:

$$T_{A+}(x_0) > T_{A-}(x_0) \approx T_B(x_0) > T_C(x_0) > T_W.$$

Die Schmelzguttemperatur $T_S(x_0)$ liegt in der Situation mit temperaturausgleichenden Elementen zwischen $T_{A+}(x_0)$ und $T_B(x_0)$:

$$T_{A+}(x_0) \geq T_S(x_0) \geq T_B(x_0).$$

Auch hier müssten die Temperaturverläufe für eine andere Anordnung von temperaturausgleichenden Elementen leicht angepasst werden; an den Grundaussagen ändert sich aber nichts.

**Patentansprüche**

**1.** Werkzeugdüse zur Spritzgussverarbeitung von Kunststoffen, mit einem von einer Wärmequelle (6) beheizten Düsenteil (1), einem unbeheizten Düsenteil (2), einem Anschnittbereich, mindestens einem Durchflusskanal (8) oder Ringspalt (14) für den Transport von Schmelzgut von der Wärmequelle (6) zum Anschnittbereich, einem Wärmeleittorpedo (9) und mindestens einem temperaturausgleichenden Element (13, 13.1, 13.11, 13.12), wobei zwecks Verringerung der Differenz zwischen der Temperatur des Schmelzgutes im Bereich der Wärmequelle (6) und der Temperatur des Schmelzgutes im Anschnittbereich der unbeheizte Düsenteil (2) eine derartige äussere Form und Abmessung aufweist, dass im wesentlichen der ganze unbeheizte Düsenteil (2) in ein Werkzeug (17) eintauchbar ist und die Wärmequelle (6) in eingetauchter Position unmittelbar an das Werkzeug (17) angrenzt, sich mindestens ein temperaturausgleichendes Element (13, 13.1, 13.11) in direktem Berührungskontakt mit der Wärmequelle (6) befindet, das mindestens eine temperaturausgleichende Element (13, 13.1, 13.11, 13.12) entlang dem Durchflusskanal (8) oder Ringspalt (14) von der Wärmequelle (6) in Richtung Anschnittbereich führt und das mindestens eine temperaturausgleichende Element (13, 13.1, 13.11, 13.12) Wärme von der Wärmequelle (6) in Richtung Anschnittbereich leitet, so dass durch die Kombination des mindestens einen temperaturausgleichenden Elementes (13, 13.1, 13.11, 13.12) mit dem Wärmeleittorpedo (9) thermische Randbedingungen für das Schmelzgut geschaffen werden, welche einer Abkühlung des Schmelzgutes entgegenwirken.

2. Düse nach Anspruch 1, **dadurch gekennzeichnet,** dass das temperaturausgleichendes Element (13, 13.1, 13.11) zumindest teilweise aus einem wärmeleitenden Material besteht und derart angeordnet ist, dass durch dieses temperatarausgleichende Element (13, 13.1, 13.11) Wärme (16) von der Wärmequelle (6) aufnehmbar und in Richtung Anschnittbereich leitbar ist.

3. Düse nach Anspruch 2, **dadurch gekennzeichnet,** dass das temperaturausgleichende Element (13, 13.1, 13.11) zumindest teilweise aus Kupfer, Kupferlegierungen oder Stahl hergestellt ist.

4. Düse nach einem der Ansprüche 1-3, **dadurch gekennzeichnet,** dass das wärmeleitende temperaturausgleichende Element (13.1) in Kontakt mit dem Wärmeleittorpedo (9) steht.

5. Düse nach einem der Ansprüche 1-4, **gekennzeichnet durch** mindestens ein weiteres temperaturausgleichendes Element (13.12, 13.2, 13.21-23, 13.3), welches die Differenz zwischen der Temperatur des Schmelzgutes im Bereich der Wärmequelle (6) und der Temperatur des Schmelzgutes im Anschnittbereich unter Ausnützung von Wärmeleitung, Wärmeisolation und/oder Wärmereflexion verringert.

6. Düse nach einem der Ansprüche 1-5, **dadurch gekennzeichnet,** dass das mindestens eine temperaturausgleichende Element (13, 13.1-3, 13.11, 13.12, 13.21-23) im wesentlichen um den mindestens einen Durchflusskanal (8) oder Ringspalt (14) angeordnet ist.

7. Düse nach Anspruch 6, **dadurch gekennzeichnet,** dass ein innerstes temperaturausgleichendes Element (13.1) zumindest teilweise die äussere Begrenzung des Durchflusskanals (8) oder Ringspaltes (14) bildet.

8. Düse nach Anspruch 6, **dadurch gekennzeichnet,** dass sich zwischen dem mindestens einen temperaturausgleichenden Element (13.11, 13.12, 13.21-23) und dem Durchflusskanal (8) oder Ringspalt (14) mindestens ein Düseninnenrohr (19) befindet.

9. Düse nach einem der Ansprüche 6-8, **dadurch gekennzeichnet,** dass mindestens ein temperaturausgleichendes Element (13, 13.1-3, 13.11, 13.12, 13.21-23) die Form eines geraden Hohlzylinders aufweist.

10. Düse nach Anspruch 9, **dadurch gekennzeichnet,** dass alle temperaturausgleichenden Elemente (13.1-3, 13.11, 13.12, 13.21-23) als koaxiale gerade Hohlzylinder mit verschiedenen Radien ausgebildet sind.

11. Düse nach einem der Ansprüche 5-10, **dadurch gekennzeichnet,** dass mindestens ein temperaturausgleichendes Element (13.2) zumindest teilweise aus einem wärmeisolierenden Material besteht und dadurch wärmeisolierende Eigenschaften aufweist.

12. Düse nach Anspruch 11, **dadurch gekennzeichnet,** dass das mindestens eine wärmeisolierende temperaturausgleichende Element (13.2) eine Luftschicht oder eine Vakuumschicht ist oder zumindest teilweise aus Kunststoff, Keramik oder Sinterkeramik hergestellt ist.

13. Düse nach einem der Ansprüche 5-12, **dadurch gekennzeichnet,** dass mindestens ein temperaturausgleichendes Element (13.3) zumindest teilweise aus einem wärmereflektierenden Material besteht und dadurch wärmereflektierende Eigenschaften aufweist.

14. Düse nach einem der Ansprüche 1-13, **dadurch gekennzeichnet,** dass mindestens ein temperamrausgleichendes Element (13.1) mit mindestens einem wärmeisolierenden Stützelement (18) gegen ein das temperaturausgleichnde Element (13.1) umgebende Werkzeug (17) abgestützt, geführt oder abgedichtet ist.

15. Düse nach einem der Ansprüche 1-14, **dadurch gekennzeichnet,** dass der Wärmeleittorpedo (9) in der Düse dadurch gehaltert wird, dass er zwischen zwei Teilen (19) der Düse eingeklemmt ist.

## Claims

1. Mould nozzle for the injection moulding of plastics, having a nozzle part (1) heated by a heat source (6), an unheated nozzle part (2), a feed orifice area, at least one flow channel (8) or annular slot (14) for conveying molten material from the heat source (6) to the feed orifice area, a heat conducting torpedo (9) and at least one temperature-compensating element (13, 13.1, 13.11, 13.12), in which for reducing the difference between the temperature of the molten material in the vicinity of the heat source (6) and the temperature of the molten material in the feed orifice area the unheated nozzle part (2) has an external shape and size such that substantially the entire unheated nozzle part (2) can be immersed in a mould (7) and the heat source (6) in the immersed position is directly adjacent to the mould (17), at least one temperature-compensating element (13, 13.1, 13.11) is in direct contact with the heat source (6), that at least one temperature-compensating element (13, 13.1, 13.11, 13.12) is guided along the flow channel (8) or annular slot (14) from the heat source (6) in the direction of the feed orifice area and that at least one temperature-compensating element (13, 13.1, 13.11, 13.12) conducts heat from the heat source (6) in the direction of the feed orifice area, so that through the combination of the at least one temperature-compensating element (13, 13.1, 13.11, 13.12) with the heat conducting torpedo (9) thermal constraints for the molten material are created, which counteract a cooling of the molten material.

2. Nozzle according to claim 1, characterized in that the temperature-compensating element (13, 13.1, 13.11) is at least partly made from a heat conducting material and is positioned in such a way that through said temperature-compensating element (13, 13.1, 13.11) heat (16) can be absorbed by the heat source (6) and conducted in the direction of the feed orifice area.

3. Nozzle according to claim 2, characterized in that the temperature-compensating element (13, 13.1, 13.11) is at least partly made from copper, copper alloys or steel.

4. Nozzle according to one of the claims 1 to 3, characterized in that the heat conducting, temperature-compensating element (13.1) is in contact with the heat conducting torpedo (9).

5. Nozzle according to one of the claims 1 to 4, characterized by at least one further temperature-compensating element (13.12, 13.2, 13.21-23, 13.3), which reduces the difference between the temperature of the molten material in the vicinity of the heat source (6) and the temperature of the molten material in the feed orifice area, whilst utilizing heat conduction, heat insulation and/or heat reflection.

6. Nozzle according to one of the claims 1 to 5, characterized in that the at least one temperature-compensating element (13, 13.1-3, 13.11, 13.12, 13.21-23) is essentially arranged around the at least one flow channel (8) or annular slot (14).

7. Nozzle according to claim 6, characterized in that an innermost, temperature-compensating element (13.1) at least partly forms the outer boundary of the flow channel (8) or annular slot (14).

8. Nozzle according to claim 6, characterized in that between the at least one temperature-compensating element (13.11, 13.12, 13.21-23) and the flow channel (8) or annular slot (14) is provided at least one nozzle inner tube (19).

9. Nozzle according to one of the claims 6 to 8, characterized in that at least one temperature-compensating element (13, 13.1-3, 13.11, 13.12, 13.21-23) is in the form of a straight hollow cylinder.

10. Nozzle according to claim 9, characterized in that all temperature-compensating elements (13.1-3, 13.11, 13.12, 13.21-23) are constructed as coaxial straight hollow cylinders with different radii.

11. Nozzle according to one of the claims 5 to 10, characterized in that at least one temperature-compensating element (13.2) is at least partly made from a heat insulating material and consequently has heat insulating characteristics.

12. Nozzle according to claim 11, characterized in that at least one heat insulating, temperature-compensating element (13.2) is an air layer or a vacuum layer or is at least partly made from plastic, ceramic or sintered ceramic.

13. Nozzle according to one of the claims 5 to 12, characterized in that at least one temperature-compensating element (13.3) is at least partly made from a heat reflecting material and consequently has heat reflecting characteristics.

14. Nozzle according to one of the claims 1 to 13, characterized in that at least one temperature-compensating element (13.1) is supported, guided or sealed with at least one heat insulating support element (18) against a mould (17) surrounding the temperature-compensating element (13.1).

15. Nozzle according to one of the claims 1 to 14, characterized in that the heat conducting torpedo (9) is retained in the nozzle in that it is jammed between two nozzle parts (19).

**Revendications**

1. Buse d'outil pour le traitement de moulage par injection de plastiques, avec une partie de buse (1) chauffée par une source de chaleur (6), une partie de buse (2) non chauffée, une zone du point d'injection, au moins un canal d'écoulement (8) ou fente annulaire (14) pour le transport de matière à fondre de la source de chaleur (6) à la zone du point d'injection, une torpille de transfert de chaleur (9) et au moins un élément d'équilibrage de température (13, 13.1, 13.11, 13.12), la partie de buse (2) non chauffée présentant une forme externe et une dimension pour la réduction de la différence entre la température de la matière à fondre dans la zone de la source de chaleur (6) et la température de la matière à fondre dans la zone du point d'injection, de telle façon que sensiblement toute la partie de buse (2) non chauffée peut être immergée dans un outil (17) et la source de chaleur (6) est contiguë directement à l'outil dans la position immergée, au moins un élément (13, 13.1, 13.11) d'équilibrage de température se trouvant en contact fortuit direct avec la source de chaleur (6), le au moins un élément d'équilibrage de température (13, 13.1, 13.11, 13.12) longeant le canal d'écoulement (8) ou la fente annulaire (14) en allant de la source de chaleur (6) en direction de la zone du point d'injection et le au moins un élément (13, 13.1, 13.11, 13.12) d'équilibrage de température guidant la chaleur de la source de chaleur (6) en direction de la zone du point d'injection, de sorte que la combinaison de au moins un élément d'équilibrage de température (13, 13.1, 13.11, 13.12) avec la torpille de transfert de chaleur (9) crée des conditions aux limites thermiques pour la matière à fondre qui s'opposent à un refroidissement de la matière à fondre.

2. Buse selon la revendication 1, caractérisée en ce que l'élément (13, 13.1, 13.11) d'équilibrage de température est au moins partiellement à base d'un matériau thermoconducteur et est disposé de telle façon que, grâce à cet élément d'équilibrage de température (13, 13.1, 13.11), de la chaleur (16) peut être absorbée par la source de chaleur (6) et peut être dirigée en direction de la zone du point d'injection.

3. Buse selon la revendication 2, caractérisée en ce que l'élément d'équilibrage de température (13, 13.1, 13.11) est fabriqué au moins partiellement à base de cuivre, d'alliages de cuivre ou d'acier.

4. Buse selon l'une quelconque des revendications 1 à 3, caractérisée en ce que l'élément (13.1) thermoconducteur d'équilibrage de température est en contact avec la torpille de transfert de chaleur (9).

5. Buse selon l'une quelconque des revendications 1 à 4, caractérisée par au moins un autre élément (13.12, 13.2, 13.21-23, 13.3) d'équilibrage de température, lequel réduit la différence entre la température de la matière à fondre dans la zone de la source de chaleur (6) et la température de la matière à fondre dans la zone du point d'injection en utilisant la conduction thermique, l'isolation thermique et/ou la réflexion thermique.

6. Buse selon l'une quelconque des revendications 1 à 5, caractérisée en ce que le au moins un élément (13, 13.1-3, 13.11, 13.12, 13.21-23) d'équilibrage de température est disposé essentiellement autour du au moins un canal d'écoulement (8) ou une fente annulaire (14).

7. Buse selon la revendication 6, caractérisée en ce qu'un élément (13.1) très interne d'équilibrage de température forme au moins partiellement la limite extérieure du canal d'écoulement (8) ou de la fente annulaire (14).

8. Buse selon la revendication 6, caractérisée en ce qu'au moins un tube intérieur de buse (19) se trouve entre le au moins un élément (13.11, 13.12, 13.21-23) d'équilibrage de température et le canal d'écoulem.ent (8) ou la fente annulaire (14).

9. Buse selon l'une quelconque des revendications 6 à 8, caractérisée en ce qu'au moins un élément (13, 13.1-3, 13.11, 13.12, 13.21-23) d'équilibrage de température présente la forme d'un cylindre creux droit.

10. Buse selon la revendication 9, caractérisée en ce que tous les éléments (13.1-3, 13.11, 13.12, 13.21-23) d'équilibrage de température sont réalisés comme des cylindres creux droits coaxiaux avec différents rayons.

11. Buse selon l'une quelconque des revendications 5-10, caractérisée en ce qu'au moins un élément (13.2) d'équilibrage de température est à base au moins partiellement d'un matériau thermoisolant et présente ainsi des propriétés thermoisolantes.

12. Buse selon la revendication 11, caractérisée en ce que le au moins un élément (13.2) thermoisolant d'équilibrage de température est une couche d'air ou une couche de vide ou est à base au moins partiellement de plastique, de céramique ou de céramique de frittage.

**13.** Buse selon l'une quelconque des revendications 5 à 12, caractérisée en ce qu'au moins un élément (13.3) d'équilibrage de température est à base au moins partiellement d'un matériau réflecteur de chaleur et présente ainsi des propriétés de réflexion de chaleur.

**14.** Buse selon l'une quelconque des revendications 1 à 13, caractérisée en ce qu'au moins un élément (13.1) d'équilibrage de température avec au moins un élément de support (18) thermoisolant est soutenu, guidé ou rendu étanche par rapport à un outil (17) entourant l'élément (13.1) d'équilibrage de température.

**15.** Buse selon l'une quelconque des revendications 1 à 14, caractérisée en ce que la torpille de transfert de chaleur (9) est supportée dans la buse de telle façon qu'elle est bloquée entre deux parties (19) de la buse.

FIG. 1

FIG. 2

FIG. 3

FIG. 4

FIG. 5

FIG. 6

FIG. 7

FIG. 8

FIG. 9